Europäisches Patentamt

European Patent Office

Office européen des brevets

(11) Publication number: **0 048 448**
A1

## (12) EUROPEAN PATENT APPLICATION

(21) Application number: 81107350.1

(22) Date of filing: 17.09.81

(51) Int. Cl.³: **C 02 F 1/52**
C 02 F 9/00, B 01 D 37/02

(30) Priority: 23.09.80 IT 2290580 U

(43) Date of publication of application:
31.03.82 Bulletin 82/13

(84) Designated Contracting States:
AT BE CH DE FR GB LI LU NL SE

(71) Applicant: Prandoni, Alfredo
Via Giambellino, 11
I-20100 Milano(IT)

(72) Inventor: Prandoni, Alfredo
Via Giambellino, 11
I-20100 Milano(IT)

(74) Representative: Modiano, Guido et al,
MODIANO & ASSOCIATI S.A.S. Via Meravigli, 16
I-20123 Milan(IT)

(54) **Apparatus for purifying industrial waste water and the like.**

(57) The apparatus comprises a load bearing frame (2) carrying a flocculation tank (5) for receiving the water to be filtered and located above a flocculated water filtering tank (12) thereunder there is provided a purified water recovery tank (14) including a pump (15) operative to recirculate the purified water which may then be delivered to the sewage system or, where desirable, reused to spare on water consumption.

EP 0 048 448 A1

This invention relates to an apparatus for purifying industrial waste water and the like.

As is known, many industrial activities involve the need for purifying waste water prior to the latter being discharged into the sewage system or, alternatively, in order to make such water re-usable.

To provide a solution to the above problem, automatic systems have already been proposed commercially which carry out the treatment of the water to be purified by means of chemical reactants effective to generate a gel containing the various impurities and being separable from said water. The water is then filtered to further trap any substances still present, until it becomes perfectly clear, odorless, and stable over prolonged periods of time, without any danger of rotting processes setting in.

Such known systems, which have generally given very satisfactory results, are very complex construction-wise because designed for purification on a continuous basis, and are unavoidably highly expensive.

Thus, the foregoing conventional systems can only be utilized in practice by large industrial establishments which require the purification of large amounts of water, but do not lend themselves for use in all those circumstances where the amount of water to be purified is very small, both because their cost would be unjustified and because they would only be partially utilizable.

Accordingly, the task of this invention is to eliminate the thereinabove mentioned drawbacks by providing an apparatus for purifying industrial waste water and the like which is specially suitable for purifying small amounts of water, thus meeting the requirements of a large number of users.

Within this task it is an object of the invention to provide such an apparatus which is very compact and involves no complex or expensive permanent installations for its use.

A further object of the invention is to provide an apparatus which is mainly manually operated, and accordingly can be manufactured with an extremely low cost.

Yet another object of the invention is to provide an apparatus for purifying industrial waste water and the like, which can be readily constructed with currently available elements and materials, and which involves no special or complicated maintenance procedures.

The aforesaid task and objects and yet other objects, such as will be apparent hereinafter, are achieved by an apparatus for purifying industrial waste water and the like, according to the invention, characterized in that it comprises a load-bearing frame carrying a flocculation tank whereinto the water to be filtered can be introduced, said flocculation tank being located above a flocculated water filtering tank, below said filtering tank there being provided a purified water recovery tank, pumping means being further provided for recirculating the purified water.

Further features and advantages of the invention will be more clearly understood from the following detailed description of an apparatus for purifying industrial waste water and the like, with reference to the accompanying exemplary drawing, the one figure whereof shows the apparatus in perspective and diagramatic form.

With reference to the cited drawing figure, the apparatus for purifying industrial waste water and the like, according to the invention, which is generally designated with the reference numeral 1, comprises a load-bearing frame 2 including, advantageously, uprights 3 and cross-members 4, and carrying, at the top portion thereof, a flocculation tank 5 which is advantageously in the form of a hopper.

Into said tank 5, water to be filtered can be introduced through delivery conduits indicated at 6.

Located above said tank, there is supported an electric blower 7 acting within the mass of water to be purified and being admitted into the tank 5; -the electric blower 6 is electrically connected to a control panel 8, which is advantageously carried on the frame 2.

At the bottom end of the tank 5, there is provided a discharge conduit 9 being controlled through valve means 10 and advantageously communicating to a distribution reservoir 11 for the flocculated water maintained into the tank 5 and flocculated by means of chemical reactants of a type known per se.

The distribution box 11 has evenly distributed openings on the bottom and serves the function of smoothly admitting the flocculated water into a filtering tank 12, located below the tank 5, and having at the bottom a filtering plate 13, which separates in practice the gel, allowing but the filtered water therethrough, in cooperation with an inert layer provided on the filtering plate 13.

The filtered water, in flowing through the filtering plate 13, enters a recovery tank 14 located below the tank 12, wherein a pumping means 15 is operative to recirculate the purified water, which may then be delivered to the sewage system or, where desirable, reused to spare on water consumption.

For completeness sake, it should be further added that to the discharge conduit 9 there is connected a branching pipe 20 in turn connected to a gauge tank 21 formed from a transparent material and located on the outside of the tank 5 to enable visual checking of the level of the water to be purified which is admitted into the tank 5.

The operation and use of the apparatus according to the invention are quite simple. In fact, it will be sufficient to introduce the contaminated water to be purified into the tank 5 until it reaches a predetermined level monitored through the gauge tank 21. Then, the chemical reactants are introduced sequentially and at pre-arranged times, the bubbling blower is actuated, and after a predetermined time, the flocculated water will be allowed to flow down through the valve means 10 into the distribution box 11 and therefrom into the filtering tank 12, wherein the slurry and

gelled matter are separated from water. Advantageously, it has been found that it is convenient to carry out the purification process at the end of a daily production cycle, allowing the thickening of the slurry and filtration of water to occur overnight.

On the following day, prior to initiating a fresh processing cycle, the only thing to do will be the extremely practical task of manually skimming the thickened slurry onto the filtering plate 13, and the possible reinstatement of the inert layer (sand) removed along with the gel.

The filtered water which collects into the recovery tank 14 is then recirculated, through the pumping means 15, back to the utilization area or, if desired, into the sewage system.

It will be appreciated from the foregoing description that the invention achieves its objects, and in particular that the extreme constructional simplicity of the apparatus affords the possibility of solving the purification problems of all those users who only deal with small amounts of contaminated water.

Another advantage of the apparatus according to the invention is that it is extremely compact, easy to transport, and above all easy and inexpensive to operate.

In practicing the invention, the materials used, as well as the dimensions and contingent shapes, may be any ones suitable for the intended application.

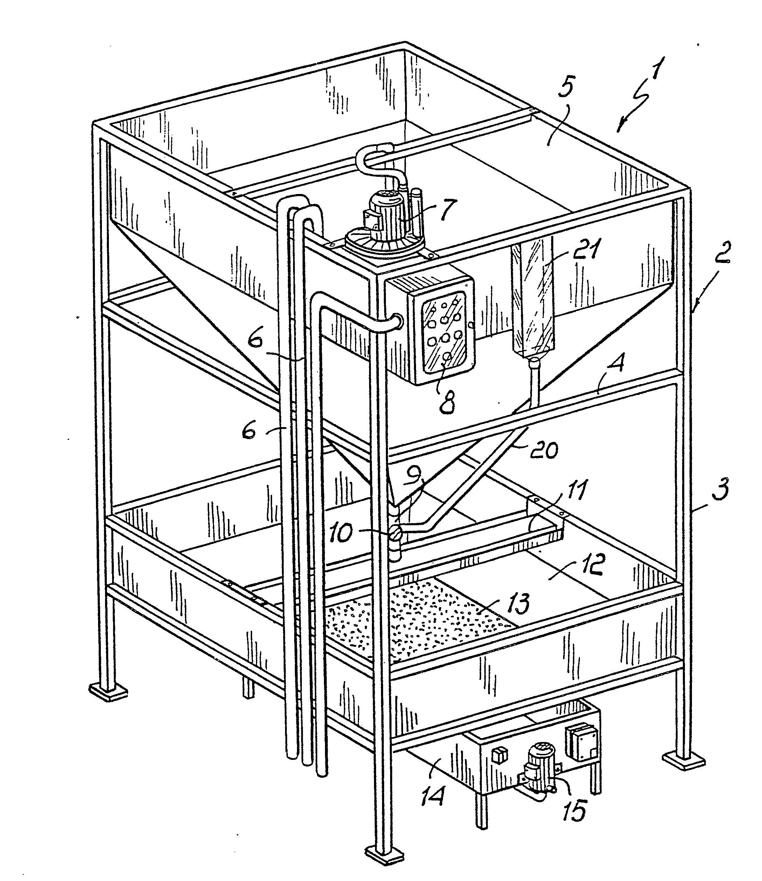

## CLAIMS

1. An apparatus for purifying industrial waste water and the like, characterized in that it comprises a load-bearing frame (2) carrying a flocculation tank (5) whereinto the water to be filtered can be introduced, said flocculation tank (5) being located above a flocculated water filtering tank (12), below said filtering tank (12) there being provided a purified water recovery tank (14), pumping means (15) being further provided for recirculating the purified water.

2. An apparatus for purifying industrial waste water and the like, characterized in that said flocculation tank (5) is substantially in the form of a hopper and has a discharge conduit (9) at its bottom end.

3. An apparatus for purifying industrial waste water and the like, according to the preceding claims, characterized in that said discharge conduit (9) opens into a flocculated water distribution reservoir (11) located above said filtering tank (12).

4. An apparatus for purifying industrial waste water, according to one or more of the preceding claims, characterized in that it comprises an electric blower (7) located above said flocculation tank (5) and acting inside said flocculation tank (5).

5. An apparatus for purifying industrial waste water and the like, according to one or more of the preceding claims, characterized in that it comprises, at the bottom of said filtering tank (12), a filtering

- 8 -

0048448

plate (13).

6. An apparatus for purifying industrial waste water and the like, according to one or more of the preceding claims, characterized in that it comprises a gauge tank (21) associated with the exterior of said flocculation tank (5) and being connected to said discharge conduit (9).

0048448

European Patent
Office

EUROPEAN SEARCH REPORT

Application number

EP 81 10 7350

| Category | Citation of document with indication where appropriate, of relevant passages | Relevant to claim |
|---|---|---|
| | GB - A - 131 488 (H. DESRUMAUX)  * the whole document * | 1-3 |
| | GB - A - 1 495 112 (FIAT)  * the whole document * | 1-5 |
| A | FR - A - 984 576 (DEGREMONT) | |
| A | CH - A - 332 459 (SANDOZ) | |
| A | DE - A - 2 124 098 (AQUA-FILT UNNEBRINK) | |
| A | US - A - 3 403 096 (S. MACKRLE et al.) | |

---------------

## DOCUMENTS CONSIDERED TO BE RELEVANT

### CLASSIFICATION OF THE APPLICATION (Int. Cl.)

C 02 F   1/52
            9/00
B 01 D 37/03

### TECHNICAL FIELDS SEARCHED (Int. Cl.)

C 02 F   1/52
            9/00
B 01 D 37/03
            21/00
C 02 F   1/66

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 16-12-1981 | VAN AKOLEYEN |

EPO Form 1503.1   06.78